# EUROPEAN PATENT SPECIFICATION

(11) **EP 2 178 021 B1**
(45) Date of publication and mention of the grant of the patent: **24.06.2015**
(21) Application number: 09012271.4
(22) Date of filing: 28.09.2009
(51) Int. Cl.: G06K 7/10, G07C 9/00

(54) **RFID detector device and associated method**
RFID-Detektorvorrichtung und dazugehöriges Verfahren
Dispositif de détecteur RFID et procédé associé

(30) Priority: 29.09.2008 SE 0850024
(43) Date of publication of application: 21.04.2010
(73) Proprietor: ASSA ABLOY AB, 10723 Stockholm (SE)
(72) Inventor: Forsberg, Tomas, 72218 Västerås (SE)
(74) Representative: Kransell & Wennborg KB

(56) References cited:
- EP-A- 1 394 720
- EP-A- 1 840 789
- GB-A- 2 278 631

## Description

### FIELD OF INVENTION

The present invention relates generally to RFID (Radio-frequency identification) detector devices, and more particularly to improving the operation of RFID readers with self-contained power supplies.

### BACKGROUND

RFID (Radio-frequency identification) is increasing in popularity. An RFID system comprises a tag and a reader, whereby one main function is for the reader to be able to query the tag for its identity. RFID has found many different uses, e.g. passport identification, transportation payments, animal identification, etc. RFID can also be used to unlock doors.

In some applications, such as in door locks, it is beneficial if the reader can be provided with an self-contained power supply, e.g. a battery. The reader can thus be self-contained and does not need to be connected to a power outlet, significantly facilitating installation.

The American patent US-6,476,708 presents a method for operating an RF transponder system to detect the presence of an RFID device in the proximal space of an RF reader unit having an excitation signal generator circuit and an RFID device detection circuit. The excitation signal generator circuit unit initially operates in a reduced power state, generating ring signals in response to a reduced electrical current and transmitting the ring signals into the proximal space. The RFID device detection circuit evaluates the ring signals to determine variations in an RFID device detection parameter. When the variations pass a variation threshold level due to the presence of the RFID device, the ring signals are terminated and the excitation signal generator circuit switches to an increased power state, wherein the excitation signal generator circuit generates an RF excitation signal which is transmitted to the RFID device.

However, the system of US-6,476,708 requires careful timing of the pulse widths for generating the detector signal. If the pulse is too long, it may cause elimination, and if the pulse is too short, there is insufficient energy to excite the tag. The careful timing requires accuracy in production due to demands on accuracy of components, requiring significant cost and/or testing. Moreover, the energy transfer is limited to two times the nominal voltage.

EP-1 840 789 presents an RFID transponder detector having a coupled oscillator system. Coupled first and second LC pairs of the system produce a detection signal each time a combination of pulses is applied to the LC pairs. Application of the pulses is repeated periodically to produce a sequence of detection signals having two different first and second detection frequencies. Transmitting the sequence of detection signals results in corresponding first and second response signals having the first and second detection frequencies at the LC pairs. Values of a preselected detection parameter for the detection signals are compared to the values of the detection parameter for the response signals to determine if a transponder having a transponder resonant frequency corresponding to the first or second detection frequency is present in a proximal space of the transponder detector.

Consequently, there is a need to provide an RFID reader with self-contained power supply, with reduced component accuracy requirements for providing an detector signal.

### SUMMARY OF THE INVENTION

According to the invention there is provided a method for detecting a radio-frequency identification tag in a radio-frequency identification detector device with a self-contained power supply. The method comprises the steps disclosed in claim 1. By loading the resonance circuit with energy and then disconnecting the power supply to allow the resonance circuit to resonate, losses are significantly reduced. Furthermore, exact timing is not critical, as the resonance circuit is simply loaded with energy for oscillation and transmission, using the time constant of the resonance circuit.

A second aspect of the invention is a radio-frequency identification detector device according to claim 8.

Generally, all terms used in the claims are to be interpreted according to their ordinary meaning in the technical field, unless explicitly defined otherwise herein. All references to "a/an/the element, device, component, means, step, etc." are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

The invention is now described, by way of example, with reference to the accompanying drawings, in which:
Fig 1 is a schematic diagram of an RFID system according to an embodiment of the present invention,
Fig 2 is a schematic circuit diagram showing the detector of Fig 1,
Fig 3 is a schematic diagram illustrating signal attenuation in the reader of Fig 1, and
Fig 4 is a schematic circuit diagram showing an example of the detector of Fig 1.

### DETAILED DESCRIPTION OF PREFERRED EMBODIMENTS

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

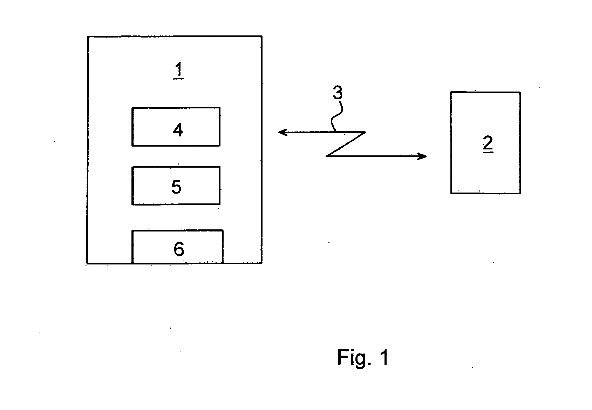

Fig 1 is a schematic diagram of an RFID system according to an embodiment of the present invention. There is an RFID reader 1 and an RFID tag 2, which communicate via a radio interface 3. The RFID tag 2 can also be referred to as a radio-frequency identification device. The RFID reader 1 comprises a self-contained power supply 6, e.g. a battery. This allows the reader to be conveniently installed in locations where mains power is not readily available, or where cables are undesired. An RFID detector device 4 within the reader is arranged to detect the presence of the RFID tag 2, when it is within the operating range of the RFID reader. When the RFID detector device 4 detects the tag 2, a main reader 5 of the reader 1 are activated. The main reader can for example comprise a tag identifier, control logic, etc. The RFID detector device 4 uses less power than the reader 5. Consequently, the reader 5 can be put into a low-power mode (e.g. sleep mode or simply powered off) as a default, which saves power, and thereby the effective operating time period between times that the power supply 6 needs to be replaced or charged is increased.

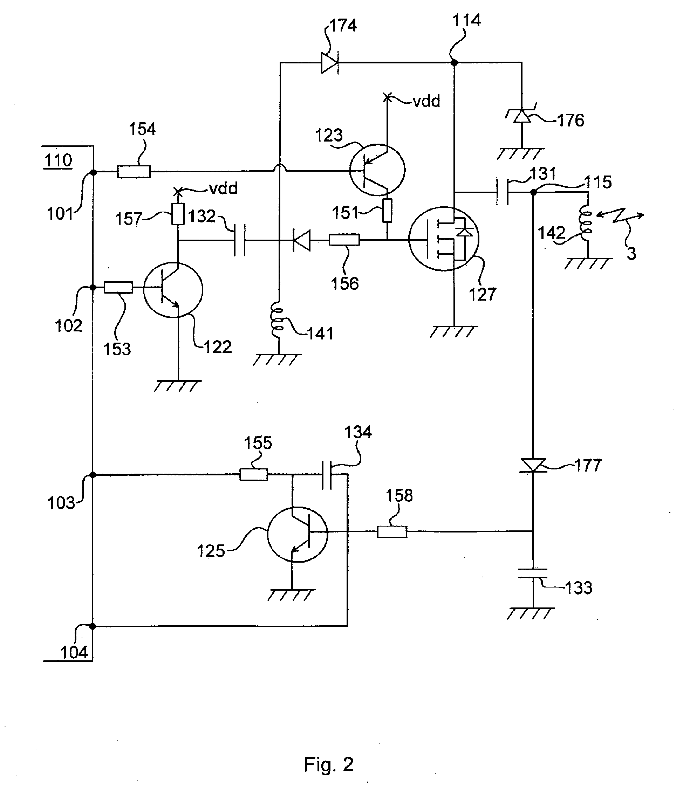

Fig 2 is a schematic circuit diagram showing the detector of Fig 1. It is to be understood that, for reasons of clarity, only main components are included. Additional components can be included without departing from the scope of protection, as defined by the appended claims. Here an energy loader circuit is arranged to load a resonance circuit with transmitter energy from a self-contained power supply.

The circuit diagram will be explained in relation to three periods, which are controlled by a controller 110, in combination with a timing circuit (not shown). The controller can be a microprocessor, or any other suitable controller capable of performing the functions as described below. Wherever the term Vdd, this denotes a positive voltage from the self-contained power supply 6. In one embodiment, Vdd is equal to about 3 volts. However, Vdd can be any other suitable voltage.

In an idle state, prior to the three periods as will be explained below, connectors 101 and 103 of the controller 110 are provided with a voltage, while connectors 102 and 104 are grounded.

In the first period, the top connector 101 of the controller 110 is still provided with a voltage, blocking transistor 123. Furthermore, a voltage is now provided on connector 102, which provides a control current to transistor 122, allowing a main current to flow through the transistor to ground. Hence, the voltage of the left side of capacitor 132 goes low, from approximately Vdd to close to zero, whereby the right side of the capacitor 132 switches from approximately zero volts to a negative voltage, close to negative Vdd. This leads to a current through inductor 141.

In the second period, connector 102 is grounded, whereby transistor 122 is blocked. The energy stored in the inductor 141 is then transferred up through diode 174, to charging capacitor 131. The resulting voltage over the capacitor 131 is relatively high, significantly higher than Vdd. Optionally, this voltage is controlled by a voltage limiter 176, such as a Zener diode. In this embodiment, the voltage limiter is a Zener diode with a breakdown voltage of about 18 Volts, which then limits the voltage at point 114 to about 18 volts.

Alternatively or additionally, timing control can control the voltage. The controller 110 can, by setting the duration of the first period, in this way control how much is charged from the portable power source, which in turn affects the voltage at point 114.

In the third period, connector 101 is also grounded, controlling transistor 123 to go into a conducting state, via current limiting resistor 154. This makes switch 127 conduct via resistor 151, which is a fast transition thanks to the use of transistor 123. The fast transition reduces losses in the switch 127 during the transition from a blocking to a conducting state. The switch 127 is here a transistor of type FET (Field-effect Transistor), which has a low internal resistance between source and drain and negligible voltage drop. When switch 127 conducts, an LC circuit consisting of inductor 142 and conductor 131 is activated. The inductor 142 acts as a transmitting antenna, sending wireless energy 3 to any RFID tag in the vicinity in the form of a wireless signal. The inductor 142 and conductor 131 are dimensioned to have a resonance frequency which corresponds to the activating frequency of the tag 2. For example, such an activating frequency can be about 13 - 15 MHz.

In other words, the switch 127 is initially turned off to allow all transmitter energy to flow to the capacitor 131. The switch 127 is subsequently switched on to prevent further energy loading of the resonance circuit and allow the resonance circuit to resonate. Transistor 123 works as a second switch to effect a fast opening of the first switch 127.

A current also flows through diode 177, through resistor 158 with a relatively high resistance, to control transistor 125. The transistor 125 and capacitor 134 are arranged as an integrator. In the first and the second period, the voltage across the capacitor 134 is the same as Vdd. To integrate, connector 103 and 104 are set in open state. The capacitor is now discharged by transistor 125 with a current almost equal to the current flowing through resistor 158. To stop the integration, the connector 104 is grounded again, and the voltage on capacitor 134 can be measured at connector 103.

Through the use of port 104 of the controller 110, the controller can short circuit the controlling current for the transistor 125, effectively turning off the de-charging of the capacitor 134. Using timings of when to ground port 104, the integration is enabled and disabled. For example, the integration can enabled when it is found that the signal difference between an absent and a present tag 2 is at its greatest.

When a tag is in the vicinity of the inductor 142, more energy is absorbed, via the wireless interface, in the tag. This results in less energy passing through diode 177, whereby less control current is supplied to the transistor 125. Consequently, the capacitor 134 is discharged less. This can be measured inside the controller 103 as a smaller reduction of an original voltage. In other words, when the tag is in the vicinity, a higher voltage is measured, compared to if no tag is in the vicinity.

In one embodiment, the first period lasts about 1,5 µs, the second time period lasts about 2,5 µs and the third period lasts about 3 µs. The three detector periods are repeated periodically to allow quick detection of any tags in the proximity. For example, the repetition rate may be 10 Hz.

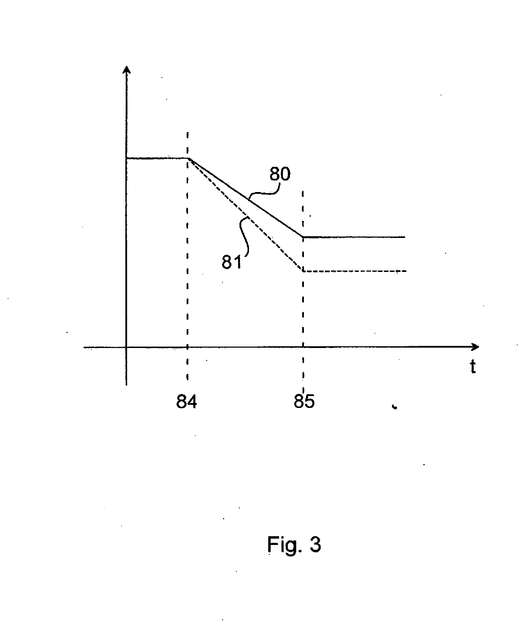

Fig 3 is a schematic diagram illustrating voltage discharge in the reader of Fig 1. The horizontal axis represents time and the vertical axis represents the voltage over an integration capacitor, such as capacitor 134 of Fig 2.

A solid line 80 represents attenuation when the tag 2 is within range of the reader 1. A dashed line 81 represents attenuation when the tag 2 is not within the range of the reader 1. The dashed line 81 shows faster attenuation, since, as explained above, the lack of energy absorbed by the tag leads to a control current through the transistor 125 which has not been reduced. Consequently, the transistor 125 reduces the voltage over the capacitor 134 with full effect. When a tag is present, however, the control current to transistor 125 is reduced, whereby the current from capacitor 134 is reduced, leading to a slower reduction of the voltage over capacitor 134, as indicated by the solid line 80. In effect, the voltage over capacitor 134 is an integration of the difference between a present and a non-present tag.

The voltage of the capacitor 134 can then be compared to a reference using connector 103 of the controller 110, to indicate whether the tag 2 is within range or not. For example, an A/D converter can convert the voltage on connector 103 to digital format and compare the digitally represented voltage value with a digital reference within the controller 110. The reference can for example indicate when there is no tag within range, such that a deviation from the reference value with more than a threshold deviation, indicates the presence of the tag 2 in the vicinity of the reader 1.

In one embodiment, the integration only occurs between a start time 84 and a stop time 85, where it has been found that a difference in signal level between a present tag and an absent tag is at its greatest. This period can for example be the third period as discussed in conjunction with Fig 2 above. This is effected by grounding connector 104 of the controller to short circuit the control current to transistor 125, when integration is not to occur. In this example, the connector 104 could be grounded before the start time 84 and after the stop time 85, to effect an integration only between the start time 84 and the stop time 85.

It is to be noted that the voltage indicating the presence or absence of the tag does not need to be the voltage of the connector 103. This voltage, or other measurement, can be any relevant related measurement of a point connected to the connector 103.

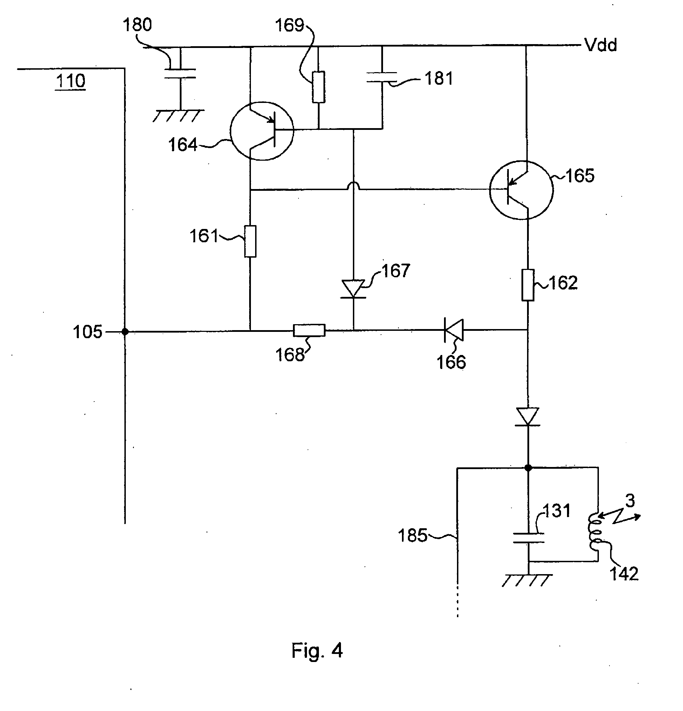

Fig 4 is a schematic circuit diagram showing an alternative example, not pertaining to the present invention, of the detector of Fig 1. Here an alternative energy loader circuit is arranged to load the resonance circuit with transmitter energy from the self-contained power supply 6.

The principle of operation of this detector is as follows. The inductor 142 of the transmitting antenna is connected to the battery (Vdd) and because of the inductance, the current through the inductor 142 ramps up. At a certain value of the current, the antenna is quickly disconnected from the battery. The switch-off time is short to avoid unnecessary energy losses during the switch. The inductor 142 thus contains the transmission energy and the resonance circuit made up of the inductor 142 and the capacitance 131 will oscillate for a few µs.

In more detail, the circuit works as follows. In idle state a controlling port 105 of the controller 110 is set to high. When a transmitter energy pulse should be generated, the controlling port 105 is set low. A transistor 165 thus gets base current via a resistor 161 and saturates, which causes the current in the antenna coil 142 to ramp up. As the current increases, the voltage across a resistor 162 also increases. Because of the diodes 166 and 167 and resistors 168 and 169, the voltage on the base of transistor 164 and the lower terminal of resistor 162 are the same.

When the voltage on the base of transistor 164 reaches about 700mV, transistor 164 turns on. This causes transistor 165 to very quickly turn off, and the resonance circuit, consisting of the inductor 142 and the capacitor 131 of the antenna circuit, oscillates. As soon as the oscillation has started, the port 105 can be set high again to save power.

In other words, the transistor 165 works as a first switch which is turned on to charge the inductor 142 with transmitter energy from the self-contained power supply. The transistor 165, or first switch, is subsequently switched off to prevent further energy loading of the resonance circuit and allow the resonance circuit to resonate. Transistor 164 works as a second switch to effect a fast opening of the first switch 165.

If the internal resistance of the portable power source (battery) is too high to be able to supply the required peak current, a capacitor 180 is needed.

Capacitor 181 is needed to make sure transistor T1 stays turned off when transistor T2 is turned on.

Once the excitation pulse has been transmitted 3 from the inductor 142, the detection of a nearby tags is performed in the same way as described with reference to Figs 2 and 3 above, as represented by the line 185.

Through desired dimensioning, the resistor 162 determined how much energy is transferred to the resonance circuit.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for detecting a radio-frequency identification tag (2) in a radio-frequency identification detector device (4) with a self-contained power supply (6), said method comprising the steps of:
loading a resonance circuit with transmitter energy supplied from said self-contained power supply (6), involving generating a voltage over a capacitor of the resonance circuit;
operating a first switch (127, 165) to prevent further energy loading of said resonance circuit and to enable said resonance circuit to resonate;
transmitting a wireless signal (3) from said resonance circuit using said transmitter energy; and
detecting a presence of a radio-frequency identification tag (2) based on an attenuation of a signal derived from said resonance circuit, caracterised in that the loading the resonant circuit with transmitter energy involves generating a voltage over the capacitor (131) of the resonant circuit which is higher than a voltage of said self-contained power supply (6).

2. The method according to claim 1, wherein said step of operating a first switch (127) involves closing said first switch (127) to prevent further loading of transmitter energy to said capacitor (131).

3. The method according to claim 1, wherein said generating a voltage over the capacitor of the resonance circuit includes controlling said voltage over the capacitor of the resonance circuit using a zener diode (176).

4. The method according to any one of claims 1 to 3, wherein said generating a voltage over the capacitor of the resonance circuit includes using an inductor (141) to generate said voltage over the capacitor of the resonance circuit.

5. The method according to any one of claims 1 to 3, wherein said generating a voltage over the capacitor of the resonance circuit includes using a charge pump to generate said voltage over the capacitor of the resonance circuit.

6. The method according to any one of the previous claims, wherein said step of detecting a presence of a radio-frequency identification tag includes integrating a signal derived from said signal derived from said resonance circuit and comparing a resulting integrated signal with a reference value.

7. The method according to claim 6, wherein said step of integration occurs between a pre-determined start time (84) and pre-determined stop time (85).

8. A radio-frequency identification detector device comprising:
a self-contained power supply (6);
a resonance circuit;
an energy loader arranged to load said resonance circuit with transmitter energy supplied from said self-contained power supply (6) by generating a voltage over a capacitor of the resonance circuit;
a first switch (127) arranged to, when changed from a first state to a second state, prevent further energy loading of said resonance circuit and to enable said resonance circuit to resonate;
a transmitter arranged to transmit a wireless signal (3) from said resonance circuit using said transmitter energy; and
a detector arranged to detect a presence of a radio-frequency identification tag (2) based on an attenuation of a signal derived from said resonance circuit, **characterised in that** the energy loader is arranged to load said resonant circuit with transmitter energy by generating a voltage over the capacitor (131) of the resonance circuit which is higher than a voltage of said self-contained power supply (6).

9. The radio-frequency identification detector device according to claim 8, wherein said energy loader is arranged to primarily load an inductor (142) of said resonance circuit with transmitter energy.

10. The radio-frequency identification detector device according to claim 9, wherein said first switch (165) is arranged to be opened to prevent further loading of transmitter energy to said inductor (142).

11. The radio-frequency identification detector device according to any one of claims 8 to 10, further comprising a controller (110) for controlling timing of transmitter energy transfer and wireless signal (3) transmission.

12. The radio-frequency identification detector device according to claim 8, wherein said energy loader comprises an inductor arranged to generate a voltage over the capacitor of the resonance circuit which is higher than a voltage of said self-contained power supply (6).

## Patentansprüche

1. Eine Methode zum Detektieren eines Radiofrequenz-Identifikationskennzeichens (2) in einem Radiofrequenz-Identifizierungsgerät (4) mit einer unabhängigen Stromversorgung (6), die genannte Methode aufweisend folgende Schritte:
das Laden eines Resonanzkreises mittels Sendeenergie die von der genannten unabhängigen Stromversorgung (6) stammt, wobei der Schritt weiter das Generieren einer Spannung über einen Kondensator des Resonanzkreises umfasst;
das Betreiben eines ersten Schalters (127, 165) um ein weiteres Laden der Energie des genannten Resonanzkreises zu verhindern und um es dem Resonanzkreis zu ermöglichen mitzuschwingen;
das Übermitteln eines drahtlosen Signals (3) von dem genannten Resonanzkreis mittels der genannten Sendeenergie; und
das Erkennen eines Vorhandenseins eines Radiofrequenz-Identifikationskennzeichens (2) basierend auf einer Dämpfung eines Signals das von dem genannten Resonanzkreis abgeleitet wurde, **dadurch gekennzeichnet, dass** das Laden des Resonanzkreises mit Sendeenergie das Generieren einer Spannung über den Kondensator (131) des Resonanzkreises umfasst, wobei diese höher ist als eine Spannung der genannten unabhängigen Stromversorgung (6).

2. Die Methode gemäss Anspruch 1, worin der genannte Schritt des Betreibens eines ersten Schalters (127) das Schliessen des genannten ersten Schalters (127) um ein weiteres Laden von Sendeenergie an den Kondensator (131) zu verhindern, umfasst.

3. Die Methode gemäss Anspruch 1, worin das genannte Generieren einer Spannung über einen Kondensator des Resonanzkreises das Regulieren der genannten Spannung über den Kondensator des Resonanzkreises mittels einer Zenerdiode (176) beinhaltet.

4. Die Methode gemäss einem der Ansprüche 1 bis 3, worin das genannte Generieren einer Spannung über den Kondensator des Resonanzkreises das Verwenden eines Induktors (141), um die genannte Spannung über den Kondensator des Resonanzkreises zu generieren, umfasst.

5. Die Methode gemäss einem der Ansprüche 1 bis 3, worin das genannte Generieren einer Spannung über den Kondensator des Resonanzkreises das Verwenden einer Ladungspumpe um die genannte Spannung über den Kondensator des Resonanzkreises zu generieren, umfasst.

6. Die Methode gemäss einem der vorangehenden Ansprüche, worin der genannte Schritt des Detektierens eines Vorhandenseins eines Radiofrequenz-Identifikationskennzeichens die Integration eines Signals, das von dem genannten Signal abgeleitet wurde, wobei das Signal vom genannten Resonanzkreis abgeleitet wurde, und das Vergleichen eines resultierenden integrierten Signals mit einem Referenzwert, umfasst.

7. Die Methode gemäss Anspruch 6, worin der genannte Schritt der Integration zwischen einer vorbestimmten Start-Zeit (84) und einer vorbestimmten Stopp-Zeit (85), stattfindet.

8. Ein Radiofrequenz-Identifikationserkennungsgerät aufweisend:
eine unabhängige Stromversorgung (6);
einen Resonanzkreis;
einen Energielader angeordnet um den genannten Resonanzkreis mit Sendeenergie, die von der unabhängigen Stromversorgung (6) geliefert wird, durch das Generieren einer Spannung über einen Kondensator des Resonanzkreises zu laden;
einen ersten Schalter (127) angeordnet um, wenn dieser von einem ersten Zustand in einen zweiten Zustand geändert wird, das weitere Energieladen des genannten Resonanzkreises zu verhindern und um es dem Resonanzkreis zu erlauben mitzuschingen;
einen Sender angeordnet um ein drahtloses Signal (3) vom genannten Resonanzkreis mittels der genannten Sendeenergie zu übermitteln; und
einen Detektor angeordnet um ein Vorhandensein eines Radiofrequenz-Identifikationskennzeichens (2) basierend auf einer Dämpfung eines Signals das von dem genannten Resonanzkreises abgeleitet wurde, zu erkennen, **dadurch gekennzeichnet, dass** der Energielader angeordnet ist um den genannten Resonanzkreis mit Sendeenergie durch das Generieren einer Spannung über den Kondensator (131) des Resonanzkreises zu laden, wobei diese Spannung höher ist als eine Spannung der genannten unabhängigen Stromversorgung (6), zu laden.

9. Das Radiofrequenz-Identifikationserkennungsgerät gemäss Anspruch 8, worin der genannte Energielader angeordnet ist um primär den Induktor (142) des genannten Resonanzkreises mit Sendeenergie zu laden.

10. Das Radiofrequenz-Identifikationserkennungsgerät gemäss Anspruch 9, worin der genannte erste Schalter (165) angeordnet ist um geöffnet zu werden um ein weiteres Laden mit Sendeenergie an den genannten Induktor (142) zu verhindern.

11. Das Radiofrequenz-Identifikationserkennungsgerät gemäss einem der Ansprüche 8 bis 10, weiter aufweisend einen Regler (110) um das Timing der Sendeenergieübertragung und der drahtlosen Signalübermittlung (3) zu regeln.

12. Das Radiofrequenz-Identifikationserkennungsgerät gemäss Anspruch 8, worin der genannte Energielader einen Induktor aufweist, der angeordnet ist um eine Spannung über den Kondensator des Resonanzkreises zu generieren, wobei diese Spannung höher ist als eine Spannung der genannten unabhängigen Stromversorgung (6).

## Revendications

1. Un procédé pour détecter une étiquette (2) d'identification par fréquence radio dans un dispositif (4) de détection d'identification par fréquence radio avec une source (6) d'énergie autonome, ledit procédé comprenant les étapes de:
charger d'un circuit de résonance avec énergie d'émetteur fourni de ladite source (6) d'énergie autonome, comportant la génération d'un voltage sur un condensateur du circuit de résonance ;
opérer un premier commutateur (127, 165) pour empêcher de charger d'énergie du dit circuit de résonance de plus et pour permettre ledit circuit de résonance de résonner ;
transmettre d'un signal (3) sans fil du dit circuit de résonance en utilisant ladite énergie de l'émetteur ; et détecter la présence d'une étiquette (2) d'identification par fréquence radio sur la base d'une atténuation d'un signal dérivé du dit circuit de résonance, **caractérise en ce que** le chargement du circuit de résonance avec énergie d'émetteur comporte générer un voltage sur le condensateur (131) du circuit de résonance, lequel voltage est supérieur qu'un voltage de ladite source (6) d'énergie autonome.

2. Le procédé selon la revendication 1, dans lequel ladite étape d'opérer un premier commutateur (127) comporte la fermeture du premier commutateur (127) pour empêcher de charger d'énergie d'émetteur audit condensateur (131).

3. Le procédé selon la revendication 1, dans lequel ladite génération d'un voltage sur le condensateur du circuit de résonance comporte contrôler ledit voltage sur le condensateur du circuit de résonance en utilisant une diode Zener.

4. Le procédé selon l'une des revendications 1 à 3, dans lequel ladite génération d'un voltage sur le condensateur du circuit de résonance comporte l'utilisation d'un inducteur (141) pour générer ledit voltage sur le condensateur du circuit de résonance.

5. Le procédé selon l'une des revendications 1 à 3, dans lequel ladite génération d'un voltage sur le condensateur du circuit de résonance comporte l'utilisation d'une pompe de charge pour générer ledit voltage sur le condensateur du circuit de résonance.

6. Le procédé selon l'une des revendications précédentes, dans lequel ladite étape de détecter une présence d'une étiquette d'identification par fréquence radio comporte l'intégration d'un signal dérivé du dit signal dérivé du dit circuit de résonance et la comparaison du signal intégré résultant avec une valeur de référence.

7. Le procédé selon la revendication 6, dans lequel ladite étape de l'intégration a lieu entre un temps (84) de départ prédéterminé et un temps (85) d'arrêt prédéterminé.

8. Un dispositif de détection d'identification par fréquence radio comprenant :
une source (6) d'énergie autonome :
un circuit de résonance ;
un chargeur d'énergie pour charger ledit circuit de résonance avec énergie d'émetteur fourni de ladite source (6) d'énergie autonome par la génération d'un voltage sur un condensateur du circuit de résonance ;
un premier commutateur (127) agencé pour, lorsque changé d'un premier état à un second état, empêcher de charger d'énergie du dit circuit de résonance de plus et pour permettre ledit circuit de résonance de résonner ;
un émetteur agencé pour transmettre un signal (3) sans fil du dit circuit de résonance en utilisant ledit énergie d'émetteur ; et
un détecteur agencé pour détecter la présence d'une étiquette (2) d'identification par fréquence radio sur la base d'une atténuation d'un signal dérivé du dit circuit de résonance, **caractérise en ce que** le chargeur d'énergie est agencé pour charger ledit circuit de résonance avec énergie d'émetteur par la génération d'un voltage sur le condensateur (131) du circuit de résonance, lequel voltage est supérieur qu'un voltage de ladite source (6) d'énergie autonome.

9. Le dispositif de détection d'identification par fréquence radio selon la revendication 8, dans lequel ledit chargeur d'énergie est agencé pour charger principalement un inducteur (142) du dit circuit de résonance avec énergie d'émetteur.

10. Le dispositif de détection d'identification par fréquence radio selon la revendication 9, dans lequel ledit premier commutateur (165) est agencé pour être ouvert pour empêcher de charger d'énergie d'émetteur audit inducteur (142) de plus.

11. Le dispositif de détection d'identification par fréquence radio selon l'une des revendications 8 à 10, de plus comprenant un régulateur (110) pour contrôler le timing de transfert d'énergie d'émetteur et la transmission du signal (2) sans fil.

12. Le dispositif de détection d'identification par fréquence radio selon la revendication 8, dans lequel ledit chargeur d'énergie comprend un inducteur agencé pour générer un voltage sur le condensateur du circuit de résonance, lequel voltage est supérieur au voltage de ladite soure (6) d'énergie autonome.
